# EUROPEAN PATENT SPECIFICATION

(11) **EP 0 491 866 B1**
(45) Date of publication and mention of the grant of the patent: **20.03.1996**
(21) Application number: 90915232.4
(22) Date of filing: 30.08.1990
(51) Int. Cl.: B60S 1/04

(54) **WIPER CLEARING DEVICE**
SCHEIBENWISCHERREINIGUNGSANORDNUNG
DISPOSITIF NETTOYEUR D'ESSUIE-GLACE

(30) Priority: 12.09.1989 US 406309; 26.02.1990 US 484763
(43) Date of publication of application: 01.07.1992
(73) Proprietor: JACOBY, John, J., Huntingdon Valley, PA 19006 (US)
(72) Inventor: JACOBY, John, J., Huntingdon Valley, PA 19006 (US)
(74) Representative: Munk, Ludwig, Dipl.-Ing.
(86) International application number: PCT/US90/04941
(87) International publication number: WO 91/03978

(56) References cited:
- CH-A- 0 638 443
- GB-A- 1 512 327
- US-A- 2 310 945
- US-A- 2 974 340
- US-A- 3 546 825
- US-A- 3 613 318
- US-A- 3 908 222
- US-A- 4 378 484
- US-A- 4 616 376
- US-A- 4 685 168

## Description

The invention relates to a wiper blade according to the preamble of claims 1 and 14.

The US-A-2 974 340 discloses an attachment for cleaning windshield wipers which comprises a transparent strip which may be attached to a windshield, the transparent strip having parallel ribs thereon which will scrape and clean the wiping edge of the windshield wiper. This device does not remove debris such as dirt, oil, insects, leaves, ice, snow etc. from the windshield wipers of vehicles in a satisfactory way.

Therefore it is an objective of the invention to provide a cleaning device, that does not allow the buildup of snow, debris, ice, etc. on the wiper or the cleaning device itself. This objective is achieved by the characterizing parts of the claims 1 and 14.

The cleaning devices according to claim 1 and 14 provide passageways for drainage, which effectively avoid the buildup of debris on the wiper and on the cleaning device itself.

Further developments in line with claims 1 and 14 are referred to in the dependent claims 2 to 13 and 15 to 24.

### Brief Description of the Drawings

For the purpose of illustrating the invention, there is shown in the drawings forms which are presently preferred; it being understood, however, that this invention is not limited to the precise arrangements and instrumentalities shown, provided the invention remains that defined by the claims.

Fig. 1 is an illustration of a prior art windshield/windshield wiper system.

Fig. 2 is a view of the present device formed integrally with a windshield.

Fig. 3 is a view of the device of Fig. 2 located in a parked position below the arcuate sweep pattern of the wipers when the wipers are operating, but above the windshield wipers when the wipers are in the off position.

Fig. 4 is an enlarged illustration of the present device containing groups of elongated projections, wherein the projections are adhesively attachable to a windshield.

Fig. 5 is an enlarged illustration of the present device comprising elongated depressions, wherein the device comprises a planar base member.

Fig. 6 is an enlarged view of the present device comprising elongated projections, wherein the device comprises a planar base member.

Fig. 7 is an elevational view of the present device looking along the bottom edge of the embodiment illustrated in Fig. 6.

Fig. 8 is an illustration of the present device wherein the scraping elements are circular and located in a parked position below the arcuate sweep pattern of the wipers when the wipers are operating, but above the wipers when the wipers are in the off position.

Fig. 9 is a cross sectional view of the device depicted in Fig. 8, taken along lines 9-9 of Fig. 8.

Fig. 10 is an enlarged view of the present device wherein the scraping elements are raised, circular projections which are adhesively attachable to a windshield.

### Detailed Description of the Preferred Embodiments

The present invention will be described with reference to the drawings, wherein like numerals indicate like elements throughout the several views.

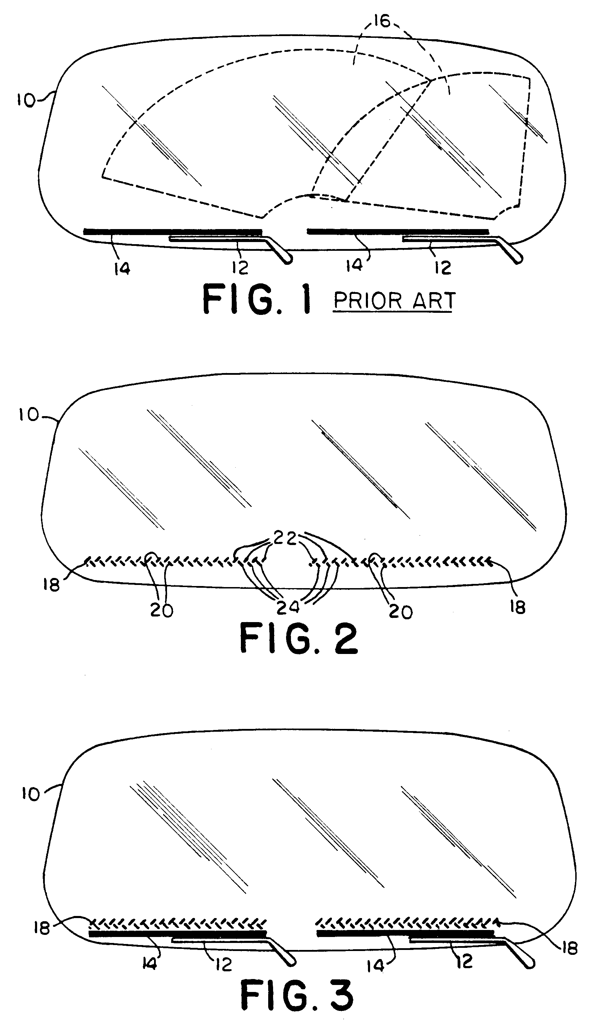

Fig. 1 illustrates a typical vehicle windshield 10 with which the present invention may be used. Associated with the windshield is a pair of windshield wiper arms 12 carrying windshield wipers 14, including the usual rubber wiper blades. As used herein, the term "wiper" refers to the wiper blades which contact the windshield, window or other surface which is wiped by the wiper. The wipers 14 are illustrated in Fig. 1 as being in a parked position below the typical arcuate sweep pattern 16 of the wipers when they are operating to wipe the windshield.

Fig. 2 illustrates a preferred placement on a windshield of one embodiment of the wiper clearing device of the present invention in the form of two scraping arrays 18, each of which represents a clearing device of the present invention. The scraping arrays 18 are comprised of a plurality of discrete scraping elements 20 arranged in two or more groups, two groups 22 and 24 being shown in Fig. 2 for purposes of illustration.

The discrete scraping elements 20 of the present clearing device may be of any shape which will be effective in cleaning the wiping edge of a windshield wiper blade 12. To be effective, the scraping elements 20 should have edges which cause a scraping or wiping action, together with a flexing action, on the wiper as the wipers 14 pass over and contact the scraping elements 20. The discrete scraping elements 20 are spaced from each other by a distance such that dirt and other material can be scraped from substantially the entire length of each wiper 14 by each array 18, and such that the material so removed can channel between and be easily removed from the arrays 18. The plurality of scraping elements 20 forming the scraping arrays 18 are arranged in groups 22 and 24 wherein the scraping elements of one group, say group 22, are at least partly aligned with the spaces between the discrete scraping elements 20 of the adjacent group(s), say group 24.

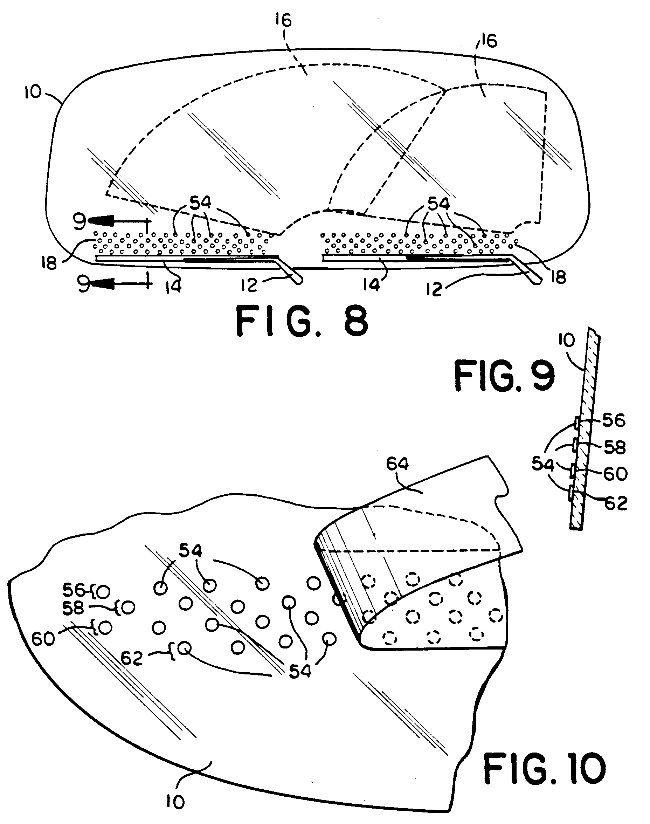

It is preferred that the scraping arrays 18 forming the wiper clearing device of the present invention be positioned on the windshield 10 at a location slightly above the wipers 14 when the wipers are in the off position. This preferred embodiment is illustrated in Figs. 3 and 8. In this preferred parked position, the scraping arrays 18 are below the arcuate sweep pattern 16 of the wipers. Further in this preferred parked position, the wipers 14 will pass over the arrays 18 when the wipers are turned both on and off, to clean the wipers prior to and at the end of each wiping session. Moreover, such an embodiment allows the clearing device to be placed in a location on the windshield 10 which will not block the field of view of the driver and thereby not hamper the driver's vision. The device will also filter the sun's harmful radiation when placed in such a location.

Alternatively, the wiper clearing device of the present invention may be located on the windshield at any location which is within the path of the movement of a wiper, such as within the arcuate sweep pattern 16 of the wipers. In this embodiment, the discrete scraping elements 20 may be transparent, since they will be in a position on the windshield 10 which will allow the wipers 14 to pass over the arrays 18 of the clearing device as the wipers move over the windshield during the normal wiping action.

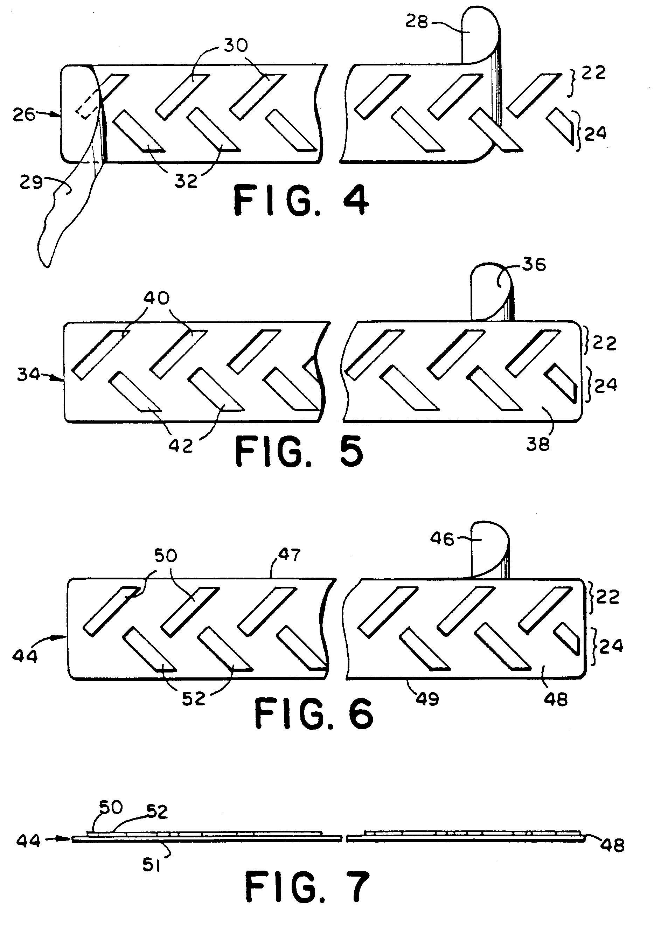

In one preferred embodiment of the present invention, the scraping elements are arranged on a first scraping element assembly 26, illustrated in Fig. 4. The assembly 26 comprises a backing sheet 28 to which discrete, spaced scraping elements 30, 32 are releasably attached. The backing sheet 28 is coated with a release material, such as silicone, to release the elongated scraping elements 30, 32 from the sheet to which they are adhesively, but removably, attached. Another release sheet 29 removably covers the opposite surface of the scraping elements 30, 32, which surface is coated with an adhesive to attach the elongated scraping elements to the windshield 10 or other object to be wiped.

In use, the release sheet 29 is removed from the assembly 26, exposing the adhesive coated scraping elements 30, 32. The scraping elements are then applied to the windshield by placing the assembly 26 in the desired position on the windshield or other object to be cleaned with the exposed adhesive surfaces of the scraping elements 30, 32 in contact with the windshield which should be clean to enhance adhesion.

Once the scraping elements 30, 32 are firmly adhesively attached to the windshield, the backing sheet 28 may be removed from the scraping elements. This leaves the scraping elements 30, 32 attached to and extending from the surface of the windshield. Thus, the scraping elements 30, 32 are elongated projections extending from the windshield.

The elongated projections 30, 32 are arranged in at least two groups 22 and 24. Each of the groups 22 and 24 comprises a series of generally parallel elongated projections 30 and 32, respectively. The projections 30 of one of the groups (e.g., 22) are spaced and arranged in a manner so that they are oriented generally perpendicular to the projections 32 of the other group (e.g., 24). Such an arrangement provides for the effective clearing and cleaning of the wiper while simultaneously allowing for drainage and resisting the accumulation of debris, snow, ice, etc. which may form on the edge of the wiper blade.

Although the scraping elements 30, 32 may be adhesively attached to the windshield as described with respect to Fig. 4, the scraping elements 20 of the present invention can be integrally formed in the windshield during its manufacture as illustrated in Figs. 2 and 3. The integrally formed scraping elements may be of the same elongated shape and in the same alignment and orientation as described above with reference to Fig. 4.

Alternatively, in another preferred embodiment, the scraping elements 20 may be in the form of depressions in a second scraping element assembly 34, as illustrated in Fig. 5 The assembly 34 comprises a backing sheet 36 which is adhesively, but removably, attached to a scraper element sheet 38. Formed in the scraper element sheet 38 are a plurality of elongated depressions 40, 42 arranged in at least two groups 22 and 24, respectively. Each of the groups 22 and 24 and depressions 40 and 42 comprises a series of generally parallel elongated depressions. The depressions 40 of one of the groups (e.g., 22) are spaced and arranged in such a manner that they are generally perpendicular to the depressions 42 of the other group (e.g., 24). In this embodiment, the depressions 40, 42 trap the debris from the wiper 14, thereby removing it. The perpendicular arrangement of the depressions 40 and 42, like the similar arrangement of projections 30, 32 promotes drainage and resists the accumulation of debris.

In use, the assembly 34 is applied to a clean windshield 10 or other clean surface to be wiped, by a simple installation process. The backing sheet 36 is removed, exposing the adhesive coated on the surface of the scraper element sheet 38 to be attached to the windshield. The assembly is then carefully positioned in the desired location and attached to the windshield by pressing the assembly 34 with the adhesive surface against the windshield.

The assembly 34, once applied to the windshield, also provides two additional scraping edges 39 and 41, corresponding to the top and bottom edges, respectively, of the assembly as illustrated in Fig. 5. When the wiper travels over the assembly 34, debris will thereby be scraped and removed from the wiper by the edges of the depressions 40 and 42 and by the edges 39 and 41 of the assembly.

As with the scraping elements in the form of elongated projections 30, 32 as discussed above, the elongated depressions 40, 42 could be formed integrally within the windshield 10 during manufacture of the windshield. Alternatively, the depressions 40, 42 could be formed directly in the windshield after manufacture by etching or otherwise removing glass from the outer surface of the windshield by techniques well known to those skilled in the art.

Another preferred embodiment of the present invention is illustrated in Figs. 6 and 7 with respect to a third scraping element assembly 44. The assembly 44 comprises a backing sheet 46 releasably covering an adhesive coating 47 applied to a scraper element sheet 48. The scraper element sheet 48 has top and bottom edges 49, 51 which act as scraping edges for a wiper. When the assembly is attached to a windshield or other surface to be wiped.

Extending from one surface of the scraping element sheet 48 are a plurality of discrete scraping elements in the form of elongated projections 50, 52 arranged in two groups 22, 24, respectively. The arrangement and orientation of the elongated projections 50, 52 on the assembly 44 are preferably substantially the same as set forth above with respect to the projections 30, 32 on the assembly 26 illustrated in Fig. 4 for substantially the same reasons. However, the projections could take other forms and have different spacings so long as there are scraping elements 20 formed in at least two groups 22, 24, such that the scraping elements of one group are aligned with the spaces between the scraping elements of the adjacent group(s).

The assembly 44 is applied to a windshield by removing backing sheet 46 to expose the adhesive coating 47. The assembly is then positioned in the desired location on the windshield and the adhesive coating 47 is pressed against the windshield, after the windshield has been cleaned.

Another preferred embodiment of the present invention is illustrated in Figs. 8, 9 and 10. In this embodiment, the scraping elements 20 take the form of raised, circular projections 54 extending from the outer surface of the windshield and arranged in two or more rows. Preferably, in this embodiment, the wiper clearing device is grouped in at least four rows as illustrated in Figs. 8, 9 and 10, the four rows being identified as 56, 58, 60 and 62. The raised, circular projections 54 are arranged generally in a staggered vertical alignment, wherein the projections 54 of every other group (e.g., 56 and 60, 58 and 62) are generally vertically aligned.

When the scraping elements 20 of the present invention take the form of raised circular projections 54, the projections may have any appropriate diameter sufficient to provide effective cleaning of a wiper 14. However, it is preferred that the raised circular projections 54 have a diameter of about 1.5 to about 4.5 mm, and more preferably, about 3.0 mm. Also, the raised circular projections 54 may have any appropriate thickness or height which is sufficient to provide effective cleaning of a windshield wiper blade 14. However, it is preferred that the raised circular projections 54 have a thickness in the range of about 0.15 mm to about 0.45 mm, and more preferably about 0.3 mm. With each group or row, the raised circular projections 54 preferably should have a generally horizontal spacing in the range of about 6.0 to about 9.0 mm, and more preferably, about 7.5 mm. The preferred center to center generally vertical spacing is in the range of about 4.5 to about 7.5 mm, and more preferably, about 6.0 mm.

The circular projection scraping elements 54 are preferably applied by adhesive to the windshield 10, as illustrated in Fig. 10, if they are not integrally formed with the windshield during its manufacture. The technique for adhesive application is substantially the same as that explained above with respect to the embodiment illustrated in Fig. 4. Thus, the scraping elements 54 are adhesively, but removably, attached to a backing sheet 64, and a release sheet (not shown) removably covers the adhesive on the opposite surface of the scraping elements. When the release sheet is removed, the adhesive is exposed. The circular projections 54 are then positioned as desired and applied to the windshield with the exposed adhesive bonding the scraping elements to the windshield. Then the backing sheet 64 is removed resulting in the pattern illustrated best in Fig. 10.

The present invention may effectively take several different embodiments as discussed above. For example, the scraping elements 20 of the present invention may be fabricated integrally with the windshield 10. This embodiment is illustrated in Figs. 2, 3 and 8. In such an embodiment, it is preferred that the scraping elements 20 be formed at the same time the windshield 10 itself is manufactured.

The scraping elements 20 of the present invention may be attached to or formed in a windshield after it has been manufactured in any appropriate manner known in the art. However, it is preferred that at least the scraping elements in the form of projections and scraping element assemblies containing depressions, such as assembly 34, be attached to the windshield or other surface to be wiped with a pressure sensitive adhesive. In such embodiments, it is preferred that the lower surface of the base member or scraper element sheet contain a pressure sensitive adhesive so that the lower surface may be attached directly to the windshield. Suitable pressure sensitive adhesives for use with the present device are, e.g., Controltac® by 3M Company ("Controltac" is a registered trademark of the 3M Company for pressure sensitive adhesive tape). However, any suitable pressure sensitive adhesive which may effectively attach the scraping elements to a windshield may be used. Other appropriate adhesives which may be used in the present invention will be evident to one skilled in the art based upon the present disclosure.

The present wiper clearing device may be of any appropriate size, as long as the device is of sufficient size to clean an entire wiper blade with each passage over a scraping array 18. However, preferably each wiper scraping array 18 has a surface area approximately equal to the plan surface area of the windshield wiper with which the scraping array 18 is associated.

The thickness, height, depth or spacing of the scraping elements 20 from the surface of the windshield 10 may vary based on the desire to obtain effective removal and cleaning of debris from the wiper balanced against the concern regarding wear on the wiper blade. For use with typical automotive windshield wipers, the thickness of the scraping elements 20 is about the thickness of the wiper blade edge which wipes the windshield, or about 0.4 mm, within a suitable range of about 0.05 to about 0.5 mm.

The scraping elements and scraping element sheets of the wiper clearing device of the present invention may be made from any appropriate material. However, the material should be compatible with the pressure sensitive adhesive used, should be hard and durable to allow for effective cleaning of the wipers and should not degrade over time. For example, the wiper clearing device 10 may be fabricated from materials such as glass beads. It will be evident to one skilled in the art from the present disclosure that other materials may be effectively used to fabricate the wiper clearing device of the present invention.

## Claims

1. A wiper clearing device for removing debris or other foreign matter from the surface of a windshield (10) comprising a plurality of partly parallel elongated scraping means (20,30,40,50,32,42,52) adapted to remove debris or other foreign matter from the surface of the wiper (14), characterized in that said elongated scraping means (20,30,40,50) being arranged in at least two groups (22,24), one (22) of the said groups (22,24) having a series of generally parallel elongated scraping means (30,40,50) and the other (24) of said groups (22,24) also having a series of generally parallel elongated scraping means (32,42,52), said elongated scraping means (30,40,50) of said one group (22) being spaced from and arranged generally perpendicular to said elongated scraping means (32,42,52) of said other group (24) as so to provide passageways for drainage.

2. The wiper clearing device of claim 1, wherein the elongated scraping means are extending projections (30,32).

3. The wiper clearing device of claim 1, wherein the scraping means are depressions (40,42).

4. The wiper clearing device of any of the claims 1 to 3, wherein each elongated means (30,40,50,32,42,52) is a continuous element.

5. The wiper clearing device of any of the claims 1 to 4, wherein the wiper clearing device comprises a generally planar base member having an upper surface, a lower surface, and side surfaces, said lower surface of said base member having adhesive means (47) thereon for attachment to the windshield (10), said upper surface having a plurality of elongated scraping means (52).

6. The wiper clearing device of claim 5, wherein said adhesive means is pressure sensitive adhesive (47).

7. The wiper clearing device of claim 5, wherein the cross sectional area of said upper surface is approximately equal to the cross sectional area of the wiper (14).

8. The wiper clearing device of any of the claims 5 to 7, wherein the base member and scraping means (20,30,40,50,32,42,52) are made of a hard durable material.

9. The wiper clearing device of any of the claims 5 to 8, wherein at least one edge of said base member forms a scraping edge for removing debris from said wiper (14).

10. The wiper clearing device of any of the claims 5 to 9, wherein the device is attached to said windshield (10) at a location within the sweep of the wiper (14).

11. The wiper clearing device of any of the claims 1 to 10, wherein the device is located beneath the wiper (14) when the wiper (14) is in a parked position such that the wiper (14) rests on the upper surface of the device.

12. The wiper clearing device of any of the claims 5 to 11, wherein the base member is releasably attached to said projections (30,32).

13. The wiper clearing device of any of the claims 1 to 4, wherein the elongated scraping means are projections (54) or depressions in the front surface of a windshield (10).

14. The wiper clearing device of any of the claims 1, 2, 5 to 12, wherein the elongated scraping means in claim 1 are replaced by a plurality of discrete raised elements (54), characterized in that said elements being arranged in horizontally extending rows (56,58,60,62) that are vertically spaced, said rows extending for a distance corresponding to the length of the wiper (14), said elements (54) being arranged in parallel horizontal alignment in each row (56,58,60,62) and in generally vertical alignment in alternate rows and in staggered alignment in adjacent rows, said elements (54) are spaced from each other by a distance such that debris and other foreign matter removed from the wiper (14) by the system can be channelled therebetween.

15. The wiper cleaning device of claim 14, wherein the elements (54) are raised, circular projections extending from the surface wiped by the wiper (14).

16. The wiper cleaning device of claim 14, wherein serrated, lateral wiper clearing channels are created between adjacent horizontal rows (56,58,60,62) of elements.

17. The wiper cleaning device of claim 15, wherein the circular projections (54) have a diameter of about 1.5 to 4.5 mm, a thickness of about 0.05 to about 0.50 mm, a center to center generally horizontal spacing of about 3 to 9 mm, a center to center generally vertical spacing of about 3.0 to about 7.0 mm.

18. The wiper cleaning device of any of the claims 14 to 17, wherein the raised elements (54) are formed integrally with the surface wiped by the wiper (14).

19. The wiper cleaning device of claim 14, wherein the systems has a plan surface area equal to a plan surface area of the wiper.

20. The wiper cleaning system of any of the claims 1 to 19, wherein the material is plastic.

21. The wiper cleaning device of any of the claims 14 to 20, wherein a path service by the wiper (14) includes an arcuate sweep pattern (16) when the wiper is operating and a parked position below the arcuate sweep pattern (16) when the wiper (14) is not operating, and wherein the raised elements (54) are located on the window (10) within the arcuate sweep pattern (16).

22. The wiper cleaning device of any of the claims 1 to 21, wherein a path service by the wiper (14) includes an arcuate sweep pattern (16) when the wiper (14) is operating and a parked position below the arcuate sweep pattern (16) when the wiper (14) is not operating, wherein the elements (54) are located within the parked position.

23. The wiper clearing device of claim 13 comprising a plurality of discrete scraping elements on the window, the scraping elements being arranged in two or more groups (22,24), disposed in a path in which the wiper travels to wipe the window and extending for a distance corresponding to the length of the wiper, the scraping elements of one group (22) being at least partly aligned with spaces between the scraping elements of the adjacent group, wherein the scraping elements comprise a plurality of elongated depressions (54) formed within the window (10), one of the groups having a first series of generally parallel elongated depressions and the other (24) of the groups having a second series of generally parallel elongated depressions, the depressions of the first series being spaced from and arranged generally perpendicular to the depressions of the second series.

24. The wiper clearing device of any of the claims 1, 3 to 11, wherein the scraping means (20,30,40,50,32,42,52) comprise a plurality of elongated depressions extending from the upper surface (49) to the lower surface (51).

## Patentansprüche

1. Scheibenwischersäuberungsvorrichtung zum Entfernen von Schmutz oder anderem Fremdmaterial von der Oberfläche einer Windschutzscheibe (10) mit einer Vielzahl von teilweise parallelen, länglichen Abschabeeinrichtungen (20,30,40,50,32,42,52) die dafür ausgebildet sind, Schmutz oder anderes Fremdmaterial von der Oberfläche des Scheibenwischers (14) zu entfernen, **dadurch gekennzeichnet, daß** besagte längliche Abschabeeinrichtung (20,30,40,50) in wenigstens zwei Gruppen (22,24) angeordnet ist, wobei eine (22) der besagten Gruppen (22,24) eine Reihe mit ungefähr parallelen, länglichen Abschabeeinrichtungen (30,40,50) und die andere (24) der besagten Gruppen (22,24) auch eine Reihe mit ungefähr parallelen, länglichen Abschabeeinrichtungen (32,42,52) aufweist, wobei die besagten länglichen Abschabeeinrichtungen (30,40,50) der besagten einen Gruppe (22) gegenüber den besagten länglichen Abschabeeinrichtungen (32,42,52) der besagten anderen Gruppe (24) beabstandet und näherungsweise senkrecht angeordnet sind, um Passage-Wege zur Drainage zu schaffen.

2. Scheibenwischersäuberungsvorrichtung nach Anspruch 1, **dadurch gekennzeichnet, daß** die länglichen Abschabeeinrichtungen längliche Vorsprünge (30,32) sind.

3. Scheibenwischersäuberungsvorrichtung nach Anspruch 1, **dadurch gekennzeichnet, daß** die Abschabeeinrichtungen Vertiefungen (40,42) sind.

4. Scheibenwischersäuberungsvorrichtung nach einem der Ansprüche 1 bis 3, **dadurch gekennzeichnet, daß** jede längliche Abschabeeinrichtung (30,40,50,32,42,52) ein durchgehendes Element ist.

5. Scheibenwischersäuberungsvorrichtung nach einem der Ansprüche 1 bis 4, **dadurch gekennzeichnet, daß** die Scheibenwischersäuberungsvorrichtung ein ungefähr planares Basisteil umfaßt, welches eine obere Oberfläche, eine untere und Oberfläche und seitliche Oberflächen aufweist, wobei besagte untere Oberfläche des besagten Basisteils darauf ein Klebemittel zur Anbringung an der Windschutzscheibe (10) aufweist, und wobei besagte obere Oberfläche eine Vielzahl von länglichen Abschabeeinrichtungen (52) aufweist.

6. Scheibenwischersäuberungsvorrichtung nach Anspruch 5, **dadurch gekennzeichnet, daß** das besagte Klebemittel ein drucksensitives Klebemittel (47) ist.

7. Scheibenwischersäuberungsvorrichtung nach Anspruch 5, **dadurch gekennzeichnet, daß** die Querschnittsfläche besagter oberer Oberfläche etwa gleich der Querschnittsfläche des Scheibenwischers (14) ist.

8. Scheibenwischersäuberungsvorrichtung nach einem der Ansprüche 5 bis 7, **dadurch gekennzeichnet, daß** das Basisteil und die Abschabeeinrichtungen (20,30,40,50,32,42,52) aus hartem, langlebigem Material gefertigt sind.

9. Scheibenwischersäuberungsvorrichtung nach einem der Ansprüche 5 bis 8, **dadurch gekennzeichnet, daß** wenigstens ein Rand des besagten Basisteils eine Abschabe-Kante zum Entfernen von Schmutz von besagtem Scheibenwischer (14) bildet.

10. Scheibenwischersäuberungsvorrichtung nach einem der Ansprüche 5 bis 9, **dadurch gekennzeichnet, daß** es an besagte Windschutzscheibe (10) an einem Ort innerhalb der Wischbewegung des Scheibenwischers (14) ist.

11. Scheibenwischersäuberungsvorrichtung nach einem der Ansprüche 1 bis 10, **dadurch gekennzeichnet, daß** es sich unter dem Scheibenwischer (14) befindet, wenn der Scheibenwischer (14) in einer geparkten Position ist, sodaß der Scheibenwischer (14) auf der oberen Oberfläche des Scheibenwischersäuberungsvorrichtunges verbleibt.

12. Scheibenwischersäuberungsvorrichtung nach einem der Ansprüche 5 bis 11, d**adurch gekennzeichnet, daß** das Basisteil lösbar an besagten Vorsprüngen (30,32) angebracht ist.

13. Scheibenwischersäuberungsvorrichtung nach einem der Ansprüche 1 bis 4, **dadurch gekennzeichnet, daß** die länglichen Abschabeeinrichtungen Vorsprünge (54) oder Vertiefungen auf der vorderen Oberfläche einer Windschutzscheibe (10) sind.

14. Scheibenwischersäuberungsvorrichtung nach einem der Ansprüche 1,2, 5 bis 11, wobei die länglichen Abschabeeinrichtungen in Anspruch 1 durch eine Vielzahl von erhobenen Elementen (54) ersetzt sind, **dadurch gekennzeichnet, daß** besagte Elemente in sich horizontal erstreckenden, vertikal beabstandeten Reihen (56,58,60,62) angeordnet sind, wobei besagte Reihen sich über eine zur Länge des Scheibenwischers (14) korrespondierende Entfernung erstrecken, und wobei besagte Elemente (54) parallel, horizontal fluchtend in jeder Reihe (56,58,60,62) angeordnet sind und in alternierenden Reihen ungefähr vertikal fluchtend und in benachbarten Reihen versetzt fluchtend angeordnet sind, und wobei besagte Elemente (54) voneinander um einen solchen Abstand beabstandet sind, daß Schmutz und anderes vom Scheibenwischer (14) entferntes Material vom System dazwischen kanalisiert werden kann.

15. Scheibenwischersäuberungsvorrichtung nach Anspruch 14, **dadurch gekennzeichnet, daß** die Elemente (54) erhobene, runde von der vom Scheibenwischer (14) gewischten Oberfläche hervorstehende Vorsprünge sind.

16. Scheibenwischersäuberungsvorrichtung nach Anspruch 14, **dadurch gekennzeichnet, daß** gezackte, seitliche Scheibenwischersäuberungskanäle zwischen benachbarten, horizontalen Reihen (56,58,60,62) von Elementen geschaffen werden.

17. Scheibenwischersäuberungsvorrichtung nach Anspruch 15, **dadurch gekennzeichnet, daß** die runden Vorsprünge (54) einen Durchmesser von etwa 1,5 mm - 4,5 mm, eine Dicke von ungefähr von 0,05 mm - 0,5 mm, einen horizontalen Abstand ihrer Mittelpunkte von allgemein etwa 3 mm - 9 mm und einen ungefähren vertikalen Abstand ihrer Mittelpunkte von etwa 3,0 mm - 7,0 mm aufweisen.

18. Scheibenwischersäuberungsvorrichtung nach einem der Ansprüche 14 bis 17, **dadurch gekennzeichnet, daß** die erhobenen Elemente (54) integriert mit der vom Scheibenwischer (14) gewischten Oberfläche ausgebildet sind.

19. Scheibenwischersäuberungsvorrichtung nach Anspruch 14, **dadurch gekennzeichnet, daß** das System die gleiche Querschnittsfläche wie der Scheibenwischer aufweist.

20. Scheibenwischersäuberungsvorrichtung nach einem der Ansprüche 1 bis 19, **dadurch gekennzeichnet, daß** das Material aus Plastik besteht.

21. Scheibenwischersäuberungsvorrichtung nach einem der Ansprüche 14 bis 20, **dadurch gekennzeichnet, daß** eine Schwenkbewegung des Scheibenwischers (14) ein bogenförmiges Wischmuster (16) umfaßt, wenn der Scheibenwischer im Betrieb ist und eine eine Parkposition unterhalb des bogenförmigen Wischmusters (16), wenn der Scheibenwischer (14) nicht tätig ist und wobei die erhobenen Elemente (54) auf der Scheibe innerhalb des bogenförmigen Wischmusters (16) angeordnet sind.

22. Scheibenwischersäuberungsvorrichtung nach einem der Ansprüche 1 bis 21, **dadurch gekennzeichnet, daß** eine Wischbewegung des Scheibenwischers (14) ein bogenförmiges Wischmuster (16) umfaßt, wenn der Scheibenwischer (14) im Betrieb ist und eine Parkposition unterhalb des bogenförmigen Wischmusters (16) wenn der Scheibenwischer (14) nicht im Betrieb ist, wobei die Elemente (54) innerhalb der Parkposition angeordnet sind.

23. Scheibenwischersäuberungsvorrichtung nach Anspruch 13, **dadurch gekennzeichnet, daß** es eine Vielzahl von einzelnen Abschabeelementen auf dem Fenster umfaßt, wobei die Abschabeelemente in zwei oder mehr Gruppen (22,24) angeordnet sind, und sich in einem Bereich befinden, welchen der Scheibenwischer beim Wischen des Fensters überstreicht und sich über eine zur Länge des Scheibenwischers korrespondierende Strecke erstrecken, wobei die Abschabeelemente einer Gruppe (22) wenigstens teilweise mit freien Bereichen zwischen den Abschabeelementen der benachbarten Gruppe fluchten, wobei die Abschabeelemente eine Vielzahl von länglichen, im Fenster (10) ausgebildeten Vertiefungen (54) umfassen, wobei eine der Gruppen eine erste Reihe von umgefähr parallelen länglichen Vertiefungen aufweist, und die andere Gruppe (24) eine zweite Reihe von ungefähr parallelen, länglichen Vertiefungen aufweist, wobei die Vertiefungen der ersten Reihe von den Vertiefungen der zweite Reihe beabstandet und ungefähr senkrecht angeordnet sind.

24. Scheibenwischersäuberungsvorrichtung nach einem der Ansprüche 1, 3 bis 11, wobei die Abschabeeinrichtungen (20,30,40,50,32,42,52) eine Vielzahl von länglichen, sich von der oberen Oberfläche (49) zur unteren Oberfläche (49) erstreckenden Vertiefungen aufweist.

## Revendications

1. Dispositif nettoyeur d'essuie-glace pour enlever les débris ou autres corps étrangers de la surface d'un parebrise (10), comprenant une pluralité de moyens de grattage allongés partiellement parallèles (20, 30, 40, 50, 32, 42, 52) conçus pour enlever les débris ou autres corps étrangers de la surface de l'essuie-glace (14), caractérisé en ce que lesdits moyens de grattage allongés (20, 30, 40, 50) sont disposés en au moins deux groupes (22, 24), l'un (22) desdits groupes (22, 24) comportant une série de moyens de grattage allongés généralement parallèles (30, 40, 50) et l'autre (24) desdits groupes (22, 24) comportant également une série de moyens de grattage allongés généralement parallèles (32, 42, 52), lesdits moyens de grattage allongés (30, 40, 50) dudit un (22) groupe étant espacés desdits moyens de grattage allongés (32, 42, 52) dudit autre groupe (24) et disposés généralement perpendiculairement à ceux-ci de manière à procurer des passages d'évacuation.

2. Dispositif nettoyeur d'essuie-glace selon la revendication 1, dans lequel les moyens de grattage allongés sont des saillies étendues (30, 32).

3. Dispositif nettoyeur d'essuie-glace selon la revendication 1, dans lequel les moyens de grattage sont des creux (40, 42).

4. Dispositif nettoyeur d'essuie-glace selon l'une quelconque des revendications 1 à 3, dans lequel chaque moyen allongé (30, 40, 50, 32, 42, 52) est un élément continu.

5. Dispositif nettoyeur d'essuie-glace selon l'une quelconque des revendications 1 à 4, dans lequel le dispositif nettoyeur d'essuie-glace comprend un élément de base généralement plan comportant une surface supérieure, une surface inférieure, et des surfaces latérales, ladite surface inférieure dudit élément de base comportant des moyens adhésifs (47) sur celle-ci pour fixation au pare-brise (10), ladite surface supérieure comportant une pluralité de moyens de grattage allongés (52).

6. Dispositif nettoyeur d'essuie-glace selon la revendication 5, dans lequel lesdits moyens adhésifs sont de l'adhésif autocollant (47).

7. Dispositif nettoyeur d'essuie-glace selon la revendication 5, dans lequel l'aire en section transversale de ladite surface supérieure est approximativement égal à l'aire en section transversale de l'essuie-glace (14).

8. Dispositif nettoyeur d'essuie-glace selon l'une quelconque des revendications 5 à 7, dans lequel l'élément de base et les moyens de grattage (20, 30, 40, 50, 32, 42, 52) sont faits d'un matériau dur durable.

9. Dispositif nettoyeur d'essuie-glace selon l'une quelconque des revendications 5 à 8, dans lequel un bord au moins dudit élément de base forme une arête de grattage destinée à enlever les débris dudit essuie-glace (14).

10. Dispositif nettoyeur d'essuie-glace selon l'une quelconque des revendications 5 à 9, dans lequel le dispositif est fixé audit pare-brise (10) en un emplacement compris dans la surface balayée par l'essuie-glace (14).

11. Dispositif nettoyeur d'essuie-glace selon l'une quelconque des revendications 1 à 10, dans lequel le dispositif est situé au-dessous de l'essuie-glace (14) lorsque l'essuie-glace (14) est en position rangée de sorte que l'essuie-glace (14) repose sur la surface supérieure du dispositif.

12. Dispositif nettoyeur d'essuie-glace selon l'une quelconque des revendications 5 à 11, dans lequel l'élément de base est fixé de façon amovible auxdites saillies (30, 32).

13. Dispositif nettoyeur d'essuie-glace selon l'une quelconque des revendications 1 à 4, dans lequel les moyens de grattage allongés sont des saillies (54) ou des creux dans la surface frontale d'un pare-brise (10).

14. Dispositif nettoyeur d'essuie-glace selon l'une quelconque des revendications 1, 2, 5 à 12, dans lequel les moyens de grattage allongés de la revendication 1 sont remplacés par une pluralité d'éléments discrets surélevés (54), caractérisé en ce que lesdits élément sont disposés en rangées s'étendant horizontalement (56, 58, 60, 62) qui sont espacées verticalement, lesdites rangées s'étendant sur une distance correspondant à la longueur de l'essuie-glace (14), lesdits éléments (54) étant disposés en alignement horizontal parallèle dans chaque rangée (56, 58, 60, 62) et en alignement généralement vertical dans des rangées alternées et en alignement en quinconce dans des rangées adjacentes, lesdits éléments (54) étant espacés les uns des autres d'une distance telle que les débris et autres corps étrangers enlevés de l'essuie-glace (14) par le système peuvent être canalisés entre ceux-ci.

15. Dispositif nettoyeur d'essuie-glace selon la revendication 14, dans lequel les éléments (54) sont des saillies circulaires surélevées s'étendant à partir de la surface balayée par l'essuie-glace (14).

16. Dispositif nettoyeur d'essuie-glace selon la revendication 14, dans lequel des canaux latéraux en dents de scie de nettoyage d'essuie-glace sont ménagés entre les rangées horizontales adjacentes (56, 58, 60, 62) d'éléments.

17. Dispositif nettoyeur d'essuie-glace selon la revendication 15, dans lequel les saillies circulaires (54) présentent un diamètre d'environ 1,5 à 4,5 mm, une épaisseur d'environ 0,05 à environ 0,50 mm, un espacement généralement horizontal de centre à centre d'environ 3 à 9 mm, un espacement généralement vertical de centre à centre d'environ 3,0 à environ 7,0 mm.

18. Dispositif nettoyeur d'essuie-glace selon l'une quelconque des revendications 14 à 17, dans lequel les éléments surélevés (54) sont formés de façon intégrale avec la surface balayée par l'essuie-glace (14).

19. Dispositif nettoyeur d'essuie-glace selon la revendication 14, dans lequel le système présente une aire de surface en plan égale à l'aire de surface en plan de l'essuie-glace.

20. Dispositif nettoyeur d'essuie-glace selon l'une quelconque des revendications 1 à 19, dans lequel le matériau est de la matière plastique.

21. Dispositif nettoyeur d'essuie-glace selon l'une quelconque des revendications 14 à 20, dans lequel l'espace décrit par l'essuie-glace (14) comprend un motif de balayage incurvé (16) lorsque l'essuie-glace est en fonction et une position rangée au-dessous du motif de balayage incurvé (16) lorsque l'essuie-glace (14) n'est pas en fonction, et dans lequel les éléments surélevés (54) sont situés sur la glace (10) à l'intérieur du motif de balayage incurvé (16).

22. Dispositif nettoyeur d'essuie-glace selon l'une quelconque des revendications 14 à 20, dans lequel l'espace décrit par l'essuie-glace (14) comprend un motif de balayage incurvé (16) lorsque l'essuie-glace est en fonction et une position rangée au-dessous du motif de balayage incurvé (16) lorsque l'essuie-glace (14) n'est pas en fonction, et dans lequel les éléments (54) sont situés à l'intérieur des limites de la position rangée.

23. Dispositif nettoyeur d'essuie-glace selon la revendication 13, comprenant une pluralité d'éléments de balayage discrets sur la glace, les éléments de balayage étant agencés en deux ou plusieurs groupes (22, 24), disposés sur un trajet que parcourt l'essuie-glace pour essuyer la glace, et s'étendant sur une distance correspondant à la longueur de l'essuie-glace, les éléments de balayage d'un premier groupe (22) étant au moins partiellement alignés avec les espaces entre les éléments de balayage du groupe adjacent, dans lequel les éléments de balayage comprennent une pluralité de creux allongés (54) formés dans la glace (10), l'un (22) des groupes comportant une première série de creux allongés généralement parallèles et l'autre (24) des groupes comportant une seconde série de creux allongés généralement parallèles, les creux de la première série étant espacés des creux de la seconde série et étant agencés généralement perpendiculairement à ceux-ci.

24. Dispositif nettoyeur d'essuie-glace selon l'une quelconque des revendications 1, 3 à 11, dans lequel les moyens de grattage (20, 30, 40, 50, 32, 42, 52) comprennent une pluralité de creux allongés s'étendant depuis la surface supérieure (49) jusqu'à la surface inférieure (51).
